# EUROPÄISCHE PATENTSCHRIFT

(11) **EP 1 054 723 B1**
(45) Veröffentlichungstag und Bekanntmachung des Hinweises auf die Patenterteilung: **12.10.2005**
(21) Anmeldenummer: 99961059.5
(22) Anmeldetag: 03.12.1999
(51) Int. Cl.: B01D 63/02, A61M 1/18, B23K 26/00

(54) **Verfahren zur Herstellung eines Dialysators**
Method for making a dialyzer
Procédé de fabrication d'un dialyseur

(30) Priorität: 11.12.1998 DE 19857139
(43) Veröffentlichungstag der Anmeldung: 29.11.2000
(73) Patentinhaber: Fraunhofer-Gesellschaft zur Förderung der angewandten Forschung e.V., 80686 München (DE)
(72) Erfinder: HENSEL, Eckehard, D-01219 Dresden (DE); WUST, Hendrik, D-01127 Dresden (DE)
(74) Vertreter: Rauschenbach, Marion
(86) Internationale Anmeldenummer: PCT/EP1999/009477
(87) Internationale Veröffentlichungsnummer: WO 2000/035566

(56) Entgegenhaltungen:
- EP-A- 0 044 193
- US-A- 4 001 110
- US-A- 4 211 602
- PATENT ABSTRACTS OF JAPAN vol. 006, no. 174 (C-123), 8. September 1982 (1982-09-08) -& JP 57 087804 A (KANEGAFUCHI CHEM IND CO LTD), 1. Juni 1982 (1982-06-01) -& DATABASE WPI Section Ch, Derwent Publications Ltd., London, GB; Class A28, AN 1982-56255E XP002134467 -& CHEMICAL ABSTRACTS, vol. 97, no. 22, 29. November 1982 (1982-11-29) Columbus, Ohio, US; abstract no. 183596, XP002134465
- PATENT ABSTRACTS OF JAPAN vol. 018, no. 288 (C-1207), 2. Juni 1994 (1994-06-02) -& JP 06 055042 A (NOK CORP), 1. März 1994 (1994-03-01) -& DATABASE WPI Section Ch, Derwent Publications Ltd., London, GB; Class A35, AN 1994-106083 XP002134468
- PATENT ABSTRACTS OF JAPAN vol. 014, no. 219 (P-1045), 9. Mai 1990 (1990-05-09) -& JP 02 049199 A (TOSHIBA CORP), 19. Februar 1990 (1990-02-19) -& DATABASE WPI Section Ch, Derwent Publications Ltd., London, GB; Class J01, AN 1990-096284 XP002134469
- PATENT ABSTRACTS OF JAPAN vol. 007, no. 091 (C-162), 15. April 1983 (1983-04-15) -& JP 58 020204 A (KURARAY KK), 5. Februar 1983 (1983-02-05) -& CHEMICAL ABSTRACTS, vol. 98, no. 24, 13. Juni 1983 (1983-06-13) Columbus, Ohio, US; abstract no. 199402, XP002134466

## Beschreibung

Die Erfindung bezieht sich auf die Gebiete der Medizintechnik und der Lasertechnik und betrifft ein Verfahren zur Herstellung eines Dialysators, wie er beispielsweise zur Hämodialyse und Ultrafiltration verwendet werden kann, wobei dieser Dialysator mittels eines Lasers modifiziert wird.

Für die Flüssigphasenpermeation, insbesondere die Hämofiltration und Ultrafiltration werden seit langem Kapillarhohlmembranen eingesetzt. Diese Hohlmembranen können aus verschiedenen Materialien hergestellt sein, beispielsweise aus Zellulose.

Derartige Hohlmembranen werden zu Bündeln zusammengefaßt und in einen zylindrischen Filterkörper, den Dialysator, eingesetzt. Anschließend werden die beiden Bündelenden unter Verwendung eines Kunststoff in den Dialysator fixiert. Dabei können die verschiedensten Kunststoffe zur Anwendung kommen. Durch diese Fixierung wird gleichzeitig der Dialysator und auch die Hohlmembranen gegen den Dialysator abgedichtet. Im Anschluß wird der überstehende Kunststoff, in dem die Hohlmembranenden eingebettet sind, durch einem mehrstufigen Schneidvorgang entfernt, so daß die Hohlmembranenden wieder freigelegt werden.

In US 5,814,179 ist der Stand der Technik bezüglich der Herstellung von Dialysatoren und den Anforderungen an sie detailliert dargestellt und die Probleme beim Herstellungsprozeß sind angegeben. Der inhaltliche Schwerpunkt liegt bei der Verbesserung der Effektivität der Membranwirkung der eingesetzten Hohlmembranen. Die Freilegung der Hohlmembranenden erfolgt durch einen mechanischen Schneidvorgang (WO 98/28065 A1). Damit hängt die Qualität von Dialysatoren und insbesondere die Qualität der Schnittflächen mit den Ein- und Austrittsöffnungen der Hohlmembranen allein von der erreichbaren Qualität des mechanischen Schnittes ab.

Für einen Schneidvorgang werden in der Regel jeweils mindestens 2 Vorschnitte und 2 Feinschnitte je Dialysatorende benötigt. Für jeden Schnitt kommt dabei ein anderes Messer zum Einsatz, d.h. es sind acht Messer pro Anlage notwendig. Es werden gehärtete Stahlmesser mit Doppelschliff und geläppter Fase verwendet. Die Standzeit der Messer ist sehr unterschiedlich, sie liegt zwischen 10 und maximal 3000 Schnitten pro Messer. Für jeden Messerwechsel muß die Anlage angehalten werden. Es kommt also zu häufigen Stillstandszeiten. Diese Stillstandszeiten verändern außerdem das Schnittergebnis durch die fortschreitende Aushärtung des Kunststoffes negativ.

Während des Schneidvorganges verläuft die Schnittrichtung senkrecht zur Längsachse der Hohlmembran, es gibt keine seitliche Schnittkraftkomponente, wie beim bewegten Kreisschnitt. Der Freiwinkel der Messer muß möglichst klein gewählt werden, um eine Schnittkraftkomponente parallel zur Hohlmembran und damit ein Herausziehen der Hohlmembran zu vermeiden. Kleine Freiwinkel verursachen aber auch ein Abgleiten der Messerfreifläche auf dem Kunststoff in Folge einer elastischen Rückfederung und damit eine nachfolgende Schädigung der Schnittfläche durch Reibung.

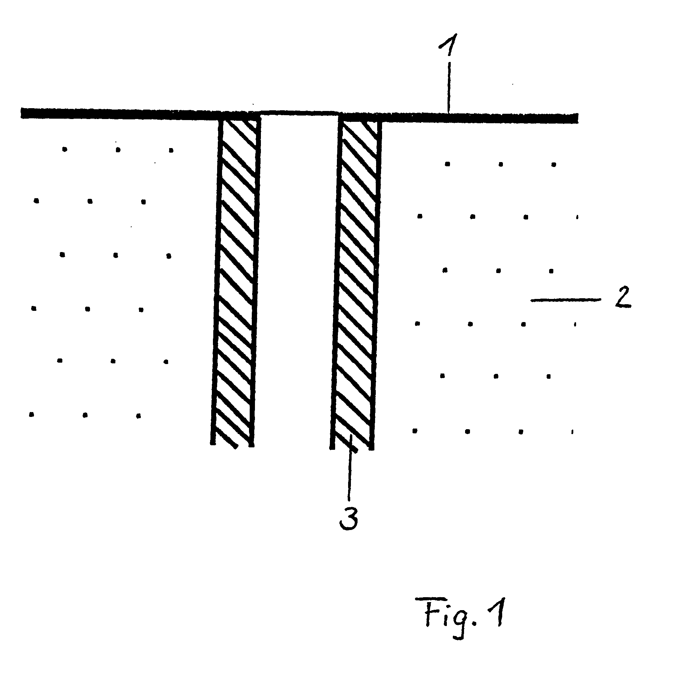

Nach dem letzten Schnitt muß der Kunststoff eine mikroskopisch glatte Oberfläche aufweisen (Fig. 1). Dabei dürfen die Hohlmembranen nicht beschädigt oder aus dem Kunststoff gelöst werden. Schon geringfügige Beschädigungen an der Oberfläche des Hohlmembranenden würden während des Einsatzes zu Verletzungen der roten Blutkörperchen und damit zu Blutgerinnungen führen. Um diesen hohen Anforderungen zu erfüllen, werden die verwendeten Schneidmesser sehr oft ausgetauscht. Trotzdem ist die Ausschußquote sehr hoch.

Weiterhin ist aus der US 4,001,110 ein Verfahren bekannt, durch dass der Durchfluss durch Dialysatoren verbessert wird, indem in den Bereichen, in denen die Hohlmembranen enden und gegen den Dialysatorkörper gedichtet sind, unter einer speziellen Abdeckung durch ein Gas eine Verbrennung erzeugt wird, die zur Abrundung der Hohlmenbranenden und Reinigung der Oberfläche führt. Zum Schutz sind die Hohlmembranen mit einem nichtbrennbaren Fluid gefüllt.

Ebenso sind aus der US 4,211,602 Verfahren zur Oberflächenverbesserung in den Bereichen der Dialysatoren, wo die Hohlmembranen enden, bekannt. Diese Verbesserung der Oberfläche wird durch Temperatureinwirkung, chemische Reaktionen, Lösungsmittel oder chemische Beschichtungsverfahren erreicht. Bezüglich der Temperatureinwirkung ist angegeben, dass durch Infrarotstrahlung in Form einer Infrarot-Heizlampe die durch den mechanischen Schneidvorgang erzeugte Oberflächenspannung abgebaut werden kann.

Aus der EP 0044193 ist weiterhin ein Verfahren bekannt, bei dem die Hohlmembranenden durch Strahlen mit Abrasivmitteln aufgeweitet werden sollen.

Weiterhin sind aus den JP 57 087804 A, JP 06 055042 A, JP 02 049199 A und JP 58 020204 A weitere Verfahren zum Schneiden der eingebetteten Hohlmembranen bekannt. Dabei verläuft der Schneidvorgang wie beim mechanischen Schnitt senkrecht zur Längsachse des Hohlmembranbündels. Die Erzeugung von Oberflächenspannungen durch das Abgleiten des Messers wird zwar weitgehend vermieden, eine Aufweitung der Hohlmembranenden ist jedoch nicht möglich.

Die Aufgabe der Erfindung besteht darin, die Stillstandzeiten bei der Bearbeitung der Dialysatorenden zu verringern und eine glatte Oberfläche der Dialysatorenden zu erreichen.

Die Aufgabe wird durch die in den Ansprüchen angegebene Erfindung gelöst. Weiterbildungen sind Gegenstand der Unteransprüche.

Durch das erfindungsgemäße Verfahren wird ein Dialysator hergestellt, der aus Hohlmembranbündeln in einem zylindrischen Körper besteht. Diese Hohlmembranbündel sind an ihren Enden an beiden Stirnseiten in einen Kunststoff eingebettet, der sowohl den Körper, als auch die Hohlmembranen gegen den Körper abdichtet. Nach dem Abschneiden und Entfernen des überschüssigen Kunststoffes von den Stirnflächen des Dialysators sind alle Hohlmembranenden offen und bilden mit der Kunststoffoberfläche eine Ebene. Durch das erfindungsgemäße Verfahren sind nun die Hohlmembranenden in den Ein- und Austrittsbereichen im Bereich der Kunststoffeinbettung trichterförmig ausgebildet, weisen verrundete Berandungen und zusammen mit dem Kunststoff eine glatte, geschmolzene und gereinigte Oberfläche auf.

Dabei werden entsprechend dem erfindungsgemäßen Verfahren zuerst die Hohlmembranen in einen zylindrischen Körper eingebracht, mittels eines Kunststoffes an den Enden in dem Körper fixiert und anschließend die Hohlmembranenden durch Abschneiden des Kunststoffes quer zu der Längsachse der Hohlmembranen freigelegt. Dabei werden mindestens die Vorschnitte mittels mechanisch gestufter Trennschnittfolgen quer zur Längsachse der Hohlmembranen entsprechend den Verfahren nach dem Stand der Technik durchgeführt. Anschließend wird erfindungsgemäß mindestens anstelle des letzten Feinschnittes eine Oberflächenbearbeitung mittels einer gepulsten Laserstrahlung im mittleren IR-Bereich durchgeführt.

Dabei wird vorteilhafterweise eine Laserstrahlung mit Pulsdauern eingesetzt, die im µs- bis ns-Bereich liegt.

Es ist auch vorteilhaft, wenn Wellenlängen der Laserstrahlung eingesetzt werden, die im Bereich von 9 bis 11 µm liegen.

Weiterhin wird vorteilhafterweise eine Laserstrahlung mit einer hohen Energiedichte eingesetzt, wobei diese Energiedichten insbesondere im Bereich von 8 bis 12,5 J/cm² liegen können.

Es ist weiterhin von Vorteil, wenn bei dem erfindungsgemäßen Verfahren ein CO₂-TEA-Laser eingesetzt wird.

Es ist auch vorteilhaft, wenn Wellenlängen der Laserstrahlung eingesetzt werden, die im Bereich von 9 bis 11 µm liegen.

Weiterhin wird vorteilhafterweise eine Laserstrahlung mit einer hohen Energiedichte eingesetzt, wobei diese Energiedichten insbesondere im Bereich von 8 bis 12,5 J/cm² liegen können.

Es ist weiterhin von Vorteil, wenn bei dem erfindungsgemäßen Verfahren ein CO₂-TEA-Laser eingesetzt wird.

Durch das erfindungsgemäße Verfahren wird mindestens anstelle des letzten Feinschnittes eine Oberflächenbearbeitung mit einer gepulsten Laserstrahlung im mittleren IR-Bereich eingesetzt.

Durch die Laserstrahlung wird die Oberfläche des die Hohlmembranenden enthaltenden Kunststoffs umgeschmolzen, ohne das Verbrennungen in der Kunststoffmatrix oder an den Hohlmembranenden auftreten. Die so bearbeiteten Oberflächen weisen eine mikroskopisch glatte Oberfläche auf, die allen gestellten Anforderungen gerecht wird.

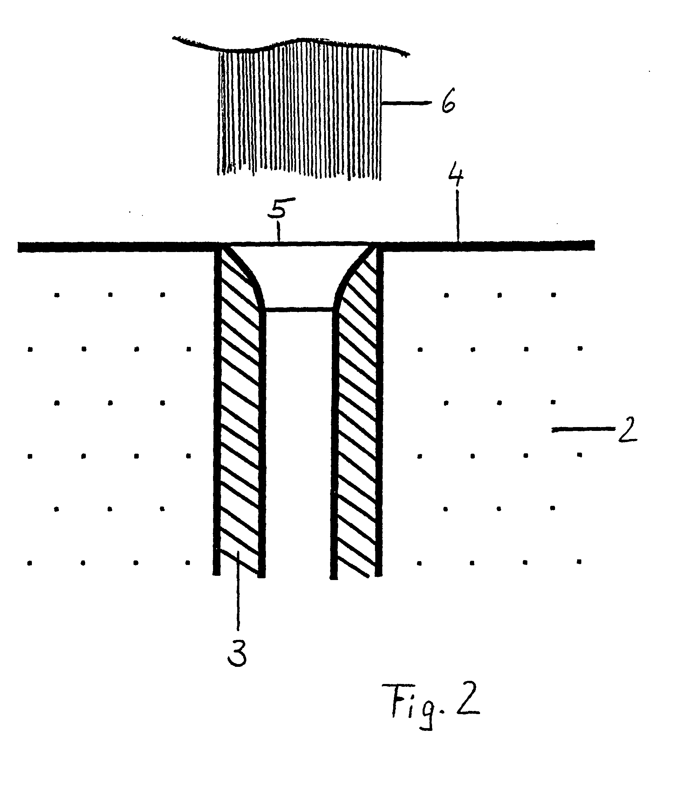

Besonderes Merkmal und Vorteil der Laserbearbeitung sind die abgerundeten und trichterförmig aufgeweiteten Enden der Hohlmembranen, wie in Fig. 2 dargestellt.

Die trichterförmige Aufweitung ist dabei auf den Bereich der Hohlmembranenden im Kunststoff beschränkt, so daß keine Beeinträchtigung der Funktion des Dialysators erfolgt.

Die trichterförmig aufgeweiteten Enden der Hohlmembranen ermöglichen ein besseres Ein- und Ausströmen der Flüssigkeiten und Vermindern oder Verhindern die Beschädigung insbesondere der roten Blutkörperchen bei Hämodialyse, wodurch die Gerinnungsgefahr minimiert wird.

Ein weiterer Vorteil der erfindungsgemäßen Lösung besteht darin, daß die Anzahl der mechanischen Schneidvorgänge auf ein Minimum reduziert werden kann, da die Bearbeitung mit der Laserstahlung auch alle Feinschnitte ersetzen kann. Dabei ist die Qualität der Vorschnitte nach Verfahren nach dem Stand der Technik ausreichend für die anschließende Laserbearbeitung. Die Schneidwerkzeuge der Vorschnitte haben eine wesentlich längere Standzeit, weil die Anforderungen geringer sind. Die aufwendigen Feinschnitte fallen teilweise oder ganz weg.

Ebenfalls ein Vorteil der erfindungsgemäßen Lösung ist, daß eine glatte Oberfläche ohne Beschädigung des Kunststoffes in Folge elastischer Ausbrüche oder Riefen in der Oberfläche erzielt wird. Mit größeren möglichen Freiwinkeln wird dem Anhaften des Kunststoffes an den Messern vorgebeugt. Eine gequetschte oder ausgerissene Kunststoffoberfläche wird weitestgehend vermieden, bzw. durch die Laserbearbeitung wieder eingeglättet.

Im weiteren wird die Erfindung an mehreren Ausführungsbeispielen näher erläutert, wobei Beispiel 2 den besten Weg zur Ausführung beschreibt.

Dabei zeigen
Fig. 1 den Zustand der Hohlmembranenden nach dem Stand der Technik und
Fig. 2 den Zustand nach der erfindungsgemäßen Behandlung.

### Beispiel 1

Zur Fixierung eines Bündels von Zellulosehohlmembranen im zylinderförmigen Körper des Dialysators wird ein PUR-Klebstoff verwendet. Durch zwei Vorschnitte an jeder Stirnseite des Körpers wird überschüssiger PUR-Werkstoff soweit abgetragen, daß die Hohlmembranenden alle freigelegt sind. Die so vorbereiteten Oberflächen werden im Anschluß durch Umschmelzen mit Hilfe eines Lasers geglättet.

Für die Laserbearbeitung wird ein CO₂-TEA-Laser mit einer Leistung von 50 W, einem Wirkfleck von 1,21 cm², einer Pulsdauer von 250 µs und einer Wellenlänge von 1060 nm verwendet. Die Bearbeitung der Gesamtfläche erfolgt durch eine Relativbewegung zwischen Laserstrahl und Materialoberfläche.

Nach der Laserbearbeitung ist die Filteroberfläche teilweise aufgeschmolzen und in diesem Zustand erstarrt, die Hohlmembranenden sind offen und trichterförmig aufgeweitet.

### Beispiel 2

Zur Fixierung eines Bündels von Zellulosehohlmembranen im zylinderförmigen Körper des Dialysators wird ein PUR-Klebstoff verwendet. Durch zwei Vorschnitte an jeder Stirnseite des Körpers wird überschüssiger PUR-Werkstoff soweit abgetragen, daß die Hohlmembranenden alle freigelegt sind. Die so vorbereiteten Oberflächen werden im Anschluß durch Umschmelzen mit Hilfe eines Lasers geglättet.

Für die Laserbearbeitung wird ein CO₂-TEA-Laser mit einer Leistung von 65 W, einem Wirkfleck von 1,21 cm², einer Pulsdauer von 250 µs und einer Wellenlänge von 1060 nm verwendet. Die Bearbeitung der Gesamtfläche erfolgt durch eine Relativbewegung zwischen Laserstrahl und Materialoberfläche.

Nach der Laserbearbeitung ist die Filteroberfläche gleichmäßig aufgeschmolzen und in diesem Zustand erstarrt, die Hohlmembranenden sind offen und trichterförmig aufgeweitet. Die gleichmäßige Schmelzschicht weist eine Dicke von weniger als 1 mm auf.

Durch das erfindungsgemäße Verfahren wird eine Verringerung der Stillstandszeiten von ca. 15 % erreicht.

### Beispiel 3

Die Herstellung des Dialysators erfolgt gemäß dem Verfahren nach Beispiel 2

Für die Laserbearbeitung wird ein CO₂-TEA-Laser mit einer Leistung von 78 W, einem Wirkfleck von 1,21 cm², einer Pulsdauer von 250 µs und einer Wellenlänge von 1060 nm verwendet.

Nach der Laserbearbeitung ist die Filteroberfläche gleichmäßig aufgeschmolzen und in diesem Zustand erstarrt, die Hohlmembranenden sind offen und trichterförmig aufgeweitet.

### Bezugszeichenliste

- 1: geschnittene Oberfläche
- 2: Kunststoff/Klebstoff
- 3: Hohlmembran/Zellulosehohlmembran
- 4: Mittels Laser bearbeitete Oberfläche
- 6: Laserstrahl

## Patentansprüche

1. Verfahren zur Herstellung eines Dialysators, bei dem Hohlmembranen (3) in einen zylindrischen Körper eingebracht, mittels eines Kunststoffes (2) an den Enden in dem Körper fixiert und anschließend die Hohlmembranenden durch Abschneiden des Kunststoffes (2) quer zu der Längsachse der Hohlmembranen (3) freigelegt werden, wobei mindestens die Vorschnitte mittels mechanisch gestufter Trennschnittfolgen quer zur Längsachse der Hohlmembranen (3) durchgeführt werden, **dadurch gekennzeichnet, daß** mindestens anstelle des letzten Feinschnittes eine Oberflächenbearbeitung mittels einer gepulsten Laserstrahlung (6) im mittleren IR-Bereich durchgeführt wird.

2. Verfahren nach Anspruch 1, **dadurch gekennzeichnet, daß** Pulsdauern der Laserstrahlung (6) eingesetzt werden, die im µs- bis ns-Bereich liegen.

3. Verfahren nach Anspruch 1, **dadurch gekennzeichnet, daß** Wellenlängen der Laserstrahlung (6) eingesetzt werden, die im Bereich von 9 bis 11 µm liegen.

4. Verfahren nach Anspruch 1, **dadurch gekennzeichnet, daß** eine Laserstrahlung (6) mit einer hohen Energiedichte eingesetzt wird.

5. Verfahren nach Anspruch 4, **dadurch gekennzeichnet, daß** eine Laserstrahlung (6) mit einer Energiedichte im Bereich von 8 bis 12,5 J/cm² eingesetzt wird.

6. Verfahren nach Anspruch 1, **dadurch gekennzeichnet, daß** ein CO₂-TEA-Laser eingesetzt wird.

## Claims

1. Process for producing a dialyzer, in which hollow membranes (3) are inserted into a cylindrical body, their ends are fixed in the body by means of a plastic (2), and the hollow membrane ends are subsequently uncovered perpendicular to the longitudinal axis of the hollow membranes by means of cutting off the plastic (2) perpendicular to the longitudinal axis of the hollow membrane (3), with at least the rough cuts being performed by means of mechanical graduated sequences of severance cuts perpendicular to the longitudinal axis of the hollow membrane (3), **characterized in that**, at least in place of the last precision cut, a surface treatment is performed by means of pulsed laser radiation (6) in the medium IR range.

2. Process according to claim 1, **characterized in that** the pulse durations of the laser radiation (6) are used that lie in the µs to ns range.

3. Process according to claim 1, **characterized in that** wavelengths of the laser radiation (6) are used that lie in the range of 9 to 11 µm.

4. Process according to claim 1, **characterized in that** laser radiation (6) with a high energy density is used.

5. Process according to claim 1, **characterized in that** laser radiation (6) with an energy density in the range of 8 to 12,5 J/cm² is used.

6. Process according to claim 1, **characterized in that** a TEA CO₂ laser is used.

## Revendications

1. Procédé de fabrication d'un dialyseur, dans lequel des membranes creuses (3) sont logées dans un corps cylindrique, fixées dans le corps au moyen d'un plastique (2) aux extrémités et finalement exposées au niveau des extrémités des membranes creuses par découpe du plastique (2) transversalement à l'axe longitudinal des membranes creuses (3), au moins les entailles préalables étant effectuées au moyen de successions de découpes étagées mécaniquement transversalement à l'axe longitudinal des membranes creuses (3), **caractérisé en ce qu'**au moins au lieu de la dernière découpe fine, un traitement de surface est effectué au moyen d'un faisceau laser pulsé (6) dans la plage moyenne des IR.

2. Procédé selon la revendication 1, **caractérisé en ce que** l'on utilise des durées d'impulsion du faisceau laser (6) qui se situent dans la plage des µs aux ns.

3. Procédé selon la revendication 1, **caractérisé en ce que** l'on utilise des longueurs d'ondes du faisceau laser (6) qui se situent dans la plage de 9 à 11 µm.

4. Procédé selon la revendication 1, **caractérisé en ce que** l'on utilise un faisceau laser (6) ayant une grande densité d'énergie.

5. Procédé selon la revendication 4, **caractérisé en ce que** l'on utilise un faisceau laser (6) avec une densité d'énergie dans la plage de 8 à 12,5 J/cm².

6. Procédé selon la revendication 1, **caractérisé en ce que** l'on utilise un laser TEA CO₂.
